# EUROPEAN PATENT SPECIFICATION

(11) **EP 4 394 327 B1**
(45) Date of publication and mention of the grant of the patent: **04.03.2026**
(21) Application number: 23198336.2
(22) Date of filing: 19.09.2023
(51) Int. Cl.: G01D 3/08, H02J 9/00

(54) **SENSOR DEVICE WITH POWER SUPPLY MANAGEMENT**
SENSORVORRICHTUNG MIT STEUERUNG DER SPANNUNGSVERSORGUNG
DISPOSITIF DE CAPTEUR AVEC GESTION D'ALIMENTATION

(30) Priority: 30.12.2022 CN 202211742844
(43) Date of publication of application: 03.07.2024
(73) Proprietor: ABB Schweiz AG, 5400 Baden (CH)
(72) Inventor: CHEN, Xu, Xiamen, Fujian Province, 361026 (CN); CHEN, Junqiang, Xiamen, Fujian Province, 361101 (CN); XU, Xiaofeng, Xiamen, Fujian Province, 361000 (CN); LIU, Jing, Xiamen, Fujian Province, 361000 (CN)
(74) Representative: Zimmermann & Partner Patentanwälte mbB

(56) References cited:
- JP-A- 2018 148 676
- US-A- 5 717 320
- US-A1- 2004 095 107
- US-A1- 2014 001 872
- US-A1- 2020 136 641

## Description

### FIELD

Embodiments of the present disclosure generally relates to the electrical field, in particular to a sensor device.

### BACKGROUND

When a low-power sensor device is in operation, it usually uses current induction to extract power and supply power. When using current induction to extract power, a large primary activation current is needed to obtain normal electric energy suitable for the sensor device. However, in the case of debugging, testing, maintenance or exhibition, it is unsafe and inconvenient to provide large activation current. In addition, the low power of electric energy obtained by current induction leads to a long charging time, so it is often impossible to upgrade the sensor device online. Accordingly, if there are some software failures or some features need to be updated, the whole sensor need to be completely replaced. The US 2014/0001872 A1 discloses a power Switching circuit connected to an external power Source, a battery, and a load. connected to an external power Source, a battery, and a load. The power Switching circuit includes a Voltage converter, a prevention unit, a detect unit, and a Switch. The Voltage converter converts a primary Voltage Supplied by the external power source to a secondary voltage.

For this reason, in order to debug and maintain safely, an external auxiliary power supply is conventionally provided for the sensor device. However, this requires additional power supply and wiring, which leads to installation complexity and potential safety risks for use in high-voltage switchgear. Therefore, it is desired to provide a sensor device that can solve the above technical problems.

### SUMMARY

The present disclosure provides a sensor that at least partially overcomes one or more of the above disadvantages. An embodiment according to a first aspect of the present disclosure provides a sensor device. The sensor device comprises: a power supply management unit configured to selectively receive internal electric energy or external electric energy and supply power to an internal circuit; a port adapted to be coupled to a sensing apparatus or an external auxiliary power supply for providing the external electric energy; a signal detection unit having a first end coupled to the power supply management unit and a second end coupled to the port, the signal detection unit being configured to generate a sensing signal when the port is coupled to the sensing apparatus; and an external auxiliary power supply switching-on unit having a first end coupled to the power supply management unit and a second end coupled to the port, the external auxiliary power supply switching-on unit being configured to transmit the electric energy to the power supply management unit in response to receiving electric energy from the port when the port is coupled to the external auxiliary power supply.

According to an embodiment of the present disclosure, the port of the sensor device can be coupled both to the sensing apparatus to transmit the sensed signal to the signal detection unit and to an external auxiliary power supply providing external electric energy to receive the external electric energy and supply the external electric energy to an internal circuit in the sensor device, thereby enabling multiplexing of the port of the sensor device. Thus, in the maintenance stage of the sensor device, such as a software upgrade, the sensor terminal can be powered by an external electric energy supply with a lower voltage after the sensor terminal so as to achieve an internal upgrade, thereby reducing the maintenance cost by not replacing the whole sensor. Further, the multiplexing of the external power supply port and the signal detection port can reduce the number of ports and wiring, thereby reducing the size of the sensor.

In some embodiments, the external auxiliary power supply switching-on unit comprises a unidirectional conduction apparatus having an input end coupled to the port and an output end coupled to the power supply management unit, and the unidirectional conduction apparatus is configured to conduct electricity in response to receiving electric energy from the port, so that the external electric energy is transmitted to the power supply management unit. In such an embodiment, the unidirectional conduction apparatus and the signal detection unit are connected in parallel between the port and the power supply management unit. When the port is coupled to the sensing apparatus, the unidirectional conducting device is turned off, and the signal from the port is transmitted to the signal detection unit. Conversely, when the port is coupled to an external auxiliary power supply, the unidirectional conduction apparatus is conducting electricity, and the unidirectional conduction apparatus connects the port directly with the power supply management unit, and the electric energy from the port is transmitted directly to the power supply management unit for external electric energy supply to the power supply management unit.

In some embodiments, the unidirectional conduction apparatus comprises a diode. In such an embodiment, the anode of the diode is coupled to the port and the cathode of the diode is coupled to the power supply management unit. When the port is coupled to the external auxiliary power supply, the anode of the diode is loaded with a positive voltage such that the diode is forward biased, transmitting the electric energy of the external auxiliary power supply to the power supply management unit.

**In** some embodiments, the diode is configured to limit the magnitude of the sensing signal when the port is coupled to the sensing apparatus. In such embodiments, the diode is capable of limiting the magnitude of the sense signal at the port to protect the circuit when the port is coupled to the sensing apparatus for measurement.

**In** some embodiments, the external auxiliary power supply switching-on unit comprises a switching apparatus having a first end coupled to the port and a second end coupled to the power supply management unit, and the switching apparatus is configured to conduct electricity in response to the port being coupled to the external auxiliary power supply, so that the external electric energy is transmitted to the power supply management unit. In such an embodiment, the switching apparatus is a normally open switch which turns on when the port is coupled to the sensing apparatus so that the sensing signal from the sensing apparatus is transmitted to the signal sensing unit. When the port is coupled to the external auxiliary power supply, the switching apparatus turns off, transmitting electric energy from the external auxiliary power supply to the power supply management unit.

In some embodiments, the switching apparatus comprises: a P-channel MOSFET having a gate configured to receive a control signal and a drain coupled to the port and a source coupled to the power supply management unit, wherein the P-channel MOSFET is configured to turn off in response to the control signal being at the high electrical level and turn on in response to the control signal being at the low electrical level. In such an embodiment, when the port is coupled to the sensing apparatus, the gate of the P-channel MOSFET receives a control signal at the high electrical level to turn off the P-channel MOSFET, thereby allowing power from the sensing apparatus to be transmitted to the signal sensing unit. When the port is coupled to an external auxiliary power supply, the gate of the P-channel MOSFET receives a control signal at the low electrical level to turn on the P-channel MOSFET, thereby allowing power from the external auxiliary power supply to be transmitted to the power supply management unit.

**In** some embodiments, the gate is coupled to a self-induction power extracting unit and is configured to receive the control signal from the self-induction power extracting unit, wherein the control signal is at the high electrical level when the self-induction power extracting unit is in operation and at the low electrical level when the self-induction power extracting unit is not in operation. In such an embodiment, when the port is coupled to an external auxiliary power supply, the self-induction power extracting unit is not in operation, and the gate of the P-channel MOSFET receives a control signal at the low electrical level to turn on, thereby allowing electric energy from the external auxiliary power supply to be transmitted to the power supply management unit. When the self-induction power-taking unit is in operation, namely, the external sensor device obtains electric energy from the self-induction power-taking unit, the port is coupled to the sensing apparatus and performs measurement, and the gate of the P-channel MOSFET receives a control signal at the high electrical level to turn off, thereby allowing the sensing signal from the sensing apparatus to be transmitted to the signal detection unit.

In some embodiments, the gate is coupled to a control unit and configured to receive the control signal from the control unit, wherein the control unit is configured to detect port voltage at the port and send the control signal at the low electrical level to the gate in response to determining that the port voltage is higher than a predetermined threshold, and send the control signal at the high electrical level to the gate in response to determining that the port voltage is lower than a predetermined threshold. In such embodiments, the control unit can sense the voltage at the port and, in the event that the voltage at the port is greater than a predetermined threshold, it is determined that the port is coupled to an external auxiliary power supply and a control signal at the low electrical level is transmitted to the gate to turn on the P-channel MOSFET, thereby allowing electric energy from the external auxiliary power supply to be transmitted to the power supply management unit. In the event that the voltage at the port is less than the predetermined threshold, the control unit can determine that the port is coupled to the sensing apparatus and transmit a high electrical level control signal to the gate to turn off the P-channel MOSFET, thereby allowing the sensing signal from the sensing apparatus to be transmitted to the signal detection unit.

In some embodiments, self-induction power extracting unit is further coupled to the power supply management unit and configured to generate the internal electric energy for transmission to the power supply management unit. In such an embodiment, when the port of the sensor device is not coupled to an external auxiliary power supply, power supply can be achieved by means of a self-induction power extracting unit.

In some embodiments, the power supply management unit comprises: an electric energy conversion apparatus coupled to the self-induction power extracting unit and configured to convert electric energy generated by the self-induction power extracting unit into power supply electric energy of the sensor device after rectification and voltage regulation. In such an embodiment, the external electric energy or the internal electric energy obtained by the power supply management unit may not have a voltage value suitable for the internal components of the sensor device or may not be sufficiently stable. By providing the electric energy conversion apparatus to rectify, stabilize and convert the acquired electric energy, the electric energy suitable for the sensor device can be obtained.

In some embodiments, the electric energy conversion apparatus comprises a reverse protection apparatus. In such embodiments, when the port is coupled to an external auxiliary power supply, electric energy from the external auxiliary power supply is transmitted into the power supply management unit to the electric energy conversion apparatus. The direction of the electric energy at this time is opposite to the direction of the electric energy when the electric energy conversion apparatus is in operation, which may cause damage to the electric energy conversion apparatus. Therefore, by providing the reverse protection means, it is possible to prevent the port from being damaged when being coupled to an external auxiliary power supply.

In some embodiments, the signal detection unit comprises: a filtering apparatus configured to filter a sensing signal, and a buffering apparatus configured to suppress a sensing signal below a predetermined voltage threshold or a predetermined current threshold. In such embodiments, interference in the sensing signal can be suppressed or eliminated by filtering; by the buffering apparatus, it is possible to avoid excessive voltage or current of the received electric energy, thereby improving the accuracy of the sensor.

In some embodiments, the signal detection unit comprises a voltage dividing apparatus and an output end, and the port comprises a first terminal and a second terminal, wherein a first end of the voltage dividing apparatus is coupled to the power supply management unit and a second end is coupled to the first terminal and the output end, and the second terminal is grounded.

In some embodiments, the sensing apparatus comprises a thermistor, and wherein, when the port is coupled to the sensing apparatus, a second end of the voltage dividing apparatus is coupled to the thermistor such that a voltage sensing signal indicating a temperature sensed by the sensing apparatus is formed at a second end of the voltage dividing apparatus. In such an embodiment, the sensing apparatus typically comprises a variable thermistor, and when the first and second terminals of the port are coupled to the sensing apparatus, the thermistor of the sensing apparatus is connected in series with the voltage dividing apparatus between the power supply management unit and ground, and sensing apparatus divide the electric energy supplied by the power supply management unit, thereby generating a sensing signal and transmitting the sensing signal via the output end to the control unit for temperature measurement.

In some embodiments, the sensor device comprises a set of signal detection units, a set of external auxiliary power supply switching-on units and a set of ports, wherein a first port in the set of ports is coupled to the sensing apparatus and a second port in the set of ports is coupled to the external auxiliary power supply. In such embodiments, the sensor device includes a plurality of ports, and each port capable of being multiplexed to be selectively coupled to the external auxiliary power supply or the sensing apparatus. When one port is coupled to the external auxiliary power supply, the components in the sensor arrangement can be powered by external electric energy from the external auxiliary power supply so that the sensing apparatus coupled at the other port can perform the measurement. Thereby, the flexibility of use of the sensor device is increased.

Signal detection (the signal detection unit can detect a voltage or a current detection signal).

An embodiment according to a second aspect of the present disclosure provides an electrical device. The electrical device comprises a sensor device according to the first aspect of the present disclosure. The electrical device may be, for example, a circuit breaker, a switch cabinet, etc. The sensor device may be used for detecting temperature rising parts in the electrical device, such as copper bar connection points, cable connection points etc. The electrical device may in particular be a copper bar or a cable joint. Here, the sensor device may be a wireless sensor, which may wirelessly transmit the operating parameters of the high voltage device to operation and maintenance personnel.

It should be understood that the description in the summary is not intended to limit the key or critical features of the embodiments of the disclosure, nor is it intended to limit the scope of the disclosure. Other features of the present disclosure will become readily apparent from the following description.

### BRIEF DESCRIPTION OF THE DRAWINGS

Through the following detailed description with reference to the accompanying drawings, the above and other objectives, features, and advantages of example embodiments of the present disclosure will become more apparent. In the drawings of the present disclosure, the same reference numerals usually refer to the same or similar components.
Fig. 1 shows a diagram of a sensor device according to an embodiment of the present disclosure;
Figs. 2A-2B show diagrams of port multiplexing circuits according to different embodiments of the present disclosure;
Figs. 3A-3B show diagrams of sensor devices when different devices are coupled according to some embodiments of the present disclosure; and
Figs. 4A-4B show diagrams of sensor devices when different devices are coupled according to other embodiments of the present disclosure.

### DETAILED DESCRIPTION OF EMBODIMENTS

Various embodiments will now be described with reference to the drawings, wherein similar reference numerals are used to refer to similar elements throughout. In the following description, for purposes of explanation, numerous specific details are set forth in order to promote a thorough understanding of one or more embodiments. However, it may be clear in some or all cases that any of the embodiments described below can be practiced without adopting the specific design details described below. In other instances, well-known structures and devices are shown in block diagram form in order to facilitate the description of one or more embodiments. The following presents a simplified summary of one or more embodiments in order to provide a basic understanding of the embodiments. This summary is not an exhaustive overview of all anticipated embodiments, nor is it intended to identify key or critical elements of all embodiments, nor is it intended to define the scope of any or all embodiments.

References to "an embodiment" or "an embodiment" in the framework of the description are intended to indicate that a particular configuration, structure or characteristic described with respect to an embodiment is included in at least one embodiment. Therefore, phrases such as "in an embodiment" or "in one embodiment" that may exist in one or more points in this description do not necessarily refer to the same embodiment. Furthermore, in one or more embodiments, specific configurations, structures, or features may be combined in any suitable manner.

Unless otherwise indicated, when referring to two elements connected together, this means direct connection without any intermediate elements other than conductors; when referring to two elements coupled together, this means that the two elements can be connected or they can be coupled via one or more other elements.

In the following disclosure, unless otherwise indicated, when referring to absolute position qualifiers such as "front", "back", "top", "bottom", "left", "right", etc. or relative position qualifiers such as "above", "below", "higher", "lower", etc., or directional qualifiers such as "horizontal", "longitude", the direction in the figures are indicated. Unless otherwise indicated, the expressions "about", "approximate", "basic" and "about" mean within 10%, preferably within 5%.

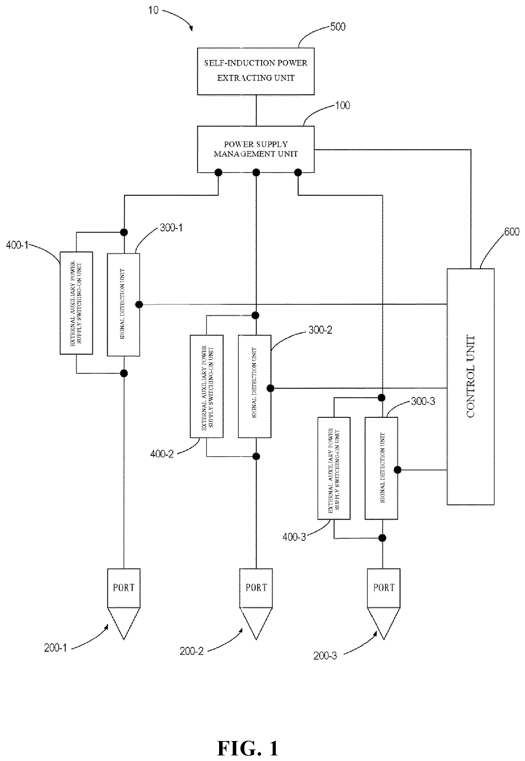

The structure and working principle of a sensor device according to an embodiment of the present disclosure will be described in detail with reference to figs. 1 to 4B.

Fig. 1 shows a diagram of a sensor device 10 according to an embodiment of the present disclosure. As shown in Fig. 1, the sensor device 10 includes a power supply management unit 100, three port multiplexing circuits, a self-induction power extracting circuit 500 and a control unit 600. The power supply management unit 100 can selectively receive internal electric energy from the self-induction power extracting circuit 500 or receive external electric energy by using the port multiplexing circuit. After that, the power supply management unit 100 processes the received electric energy and uses the processed electric energy to supply power to the internal circuit. The power supply management unit 100 may be coupled to an internal circuit or a device of the sensor device 10, for example, to transmit the received processed electric energy to various means. It should be understood that the port multiplexing circuit shown in Fig. 1 is only an example. The sensor device 10 may have a port multiplexing circuit and other circuits only used for signal detection. This disclosure is not intending to be limiting.

For example, the self-induction power extracting circuit 500 can generate electric energy by using the magnetic field generated by the power supply wire of the electrical equipment where the sensor device 10 is located in accordance with the current, or it can also be any circuit capable of generating electric energy by using external energy. This disclosure is not intending to be limiting. The control unit 600 may be, for example, a microcontroller unit (MCU) in the sensor device 10. The control unit 600 is coupled to the power supply management unit 100 and obtains electric energy from the power supply management unit 100. The control unit 600 can receive various sensing signals of the sensor device 10 and send control signals to controlled means in the sensor device 10.

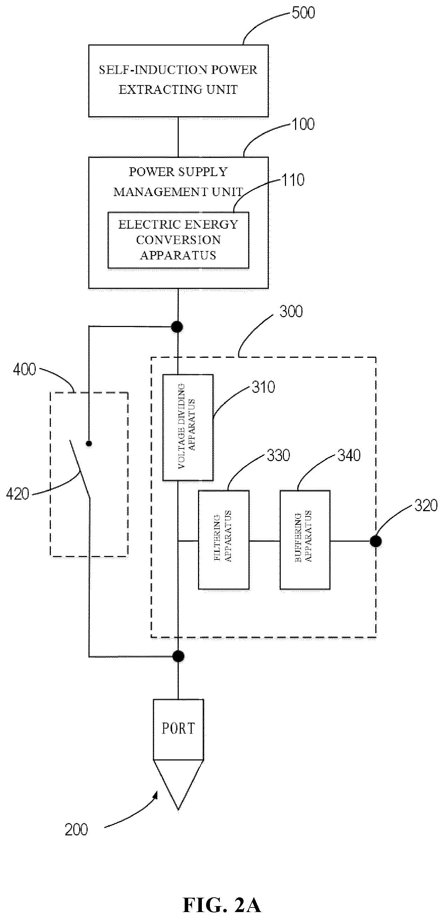

A first port multiplex circuit includes a port 200-1, and a signal detection unit 300-1 and an external auxiliary power supply switching-on unit 400-1 connected in parallel between the power supply management unit 100 and the port 200-1. Correspondingly, a second port multiplex circuit comprises a port 200-2, a signal detection unit 300-2 and an external auxiliary power supply switching-on unit 400-2 connected in parallel between the power supply management unit 100 and the port 200-2. A third port multiplexing circuit includes a port 200-3 (collectively referred to as a port 200 with ports 200-1 and 200-2), a signal detection unit 300-3 (collectively referred to as a signal detection unit 300 with signal detection units 300-1 and 300-2) and the external auxiliary power supply switching-on unit 400-3 connected in parallel between the power supply management unit 100 and the port 200-3. The signal detection unit 300 can generate a sensing signal when the port 200 is coupled to a sensing apparatus. When the port 200 is coupled to an external auxiliary power supply, if the external auxiliary power supply switching-on unit 400 receives external electric energy from the port 200, the external auxiliary power supply switching-on unit 400 causes the received electric energy to be transmitted to the power supply management unit 100. The specific structure of the port multiplexing circuit will be described in detail with reference to figs. 2A- 2B.

Fig. 2A shows a diagram of a port multiplexing circuit according to some embodiments of the present disclosure. As shown in Fig. 2A, the power supply management unit 100 includes an electric energy conversion apparatus 110. The electric energy conversion apparatus 110 is coupled to the self-induction power extracting unit 500 and configured to convert the electric energy generated by the self-induction power extracting unit 500 into power supply electric energy for the sensor device 10 after rectification and voltage regulation. The electric energy conversion apparatus 110 can be, for example, a low dropout regulator (LDO). The signal detection unit 300 includes a voltage dividing apparatus 310 coupled between the power supply management unit 100 and the port 200 and an output end 320 for outputting a signal. When the sensor device 10 is installed in an electrical device for operation, for example, the port 200 is coupled to the sensing apparatus 20 (not shown here). At this time, the electric energy conversion apparatus 110 can convert the electric energy generated by the self-induction power extracting unit 500 into power supply electric energy and transmit it to the signal detection unit 300. The voltage dividing apparatus 310 and the sensing apparatus 20 coupled to the port 200 divide the electric energy from the electric energy conversion apparatus 110, and form a voltage sensing signal at the second end of the voltage dividing apparatus 310 coupled to the port 200. In addition, a filter device 330 and a buffering apparatus 340 are connected in series between the second end of the voltage dividing apparatus 310 and the output end 320. The filtering apparatus 330 filters the sensing signal to suppress or remove interference in the signal. The buffering apparatus 340 suppresses the sensing signal below a predetermined voltage threshold or a predetermined current threshold, so as to prevent the control unit 600 from being damaged due to excessive voltage or current of the sensing signal.

In the embodiment shown in Fig. 2A, the external auxiliary power supply switching-on unit 400 includes a unidirectional conduction apparatus 410. The input end of the unidirectional conduction apparatus 410 is coupled to the port 200 and output end thereof is coupled to the power supply management unit 100. The unidirectional conduction apparatus 410 conducts when input thereof receives external electric energy from the port 200. At this time, the signal detection unit 300 is shorted, so that external electric energy is directly transmitted to the power supply management unit 100. When the electric energy is transmitted from the port 200 to the power supply management unit 100, the current direction thereof is opposite to that of the electric energy converted by the electric energy conversion apparatus 110. In order to avoid damage to the electric energy conversion apparatus 110, the electric energy conversion apparatus 110 includes a reverse protection apparatus. In some embodiments, the unidirectional conduction apparatus 410 can be, for example, a diode or a triode with a corresponding controller.

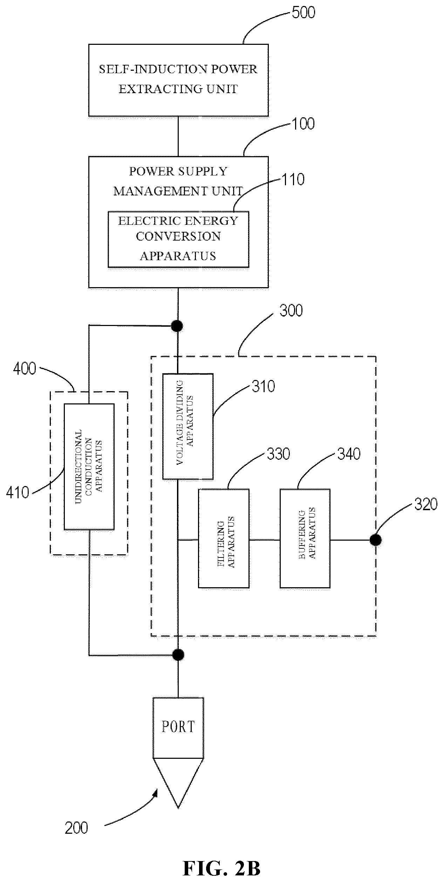

Fig. 2B shows a diagram of a port multiplexing circuit according to some embodiments of the present disclosure. Different from the circuit shown in Fig. 2A, the external auxiliary power supply switching-on unit 400 of the port multiplexing circuit shown in Fig. 2B includes a switching apparatus 420. A first end of the switching apparatus 420 is coupled to the port 200 and a second end thereof is coupled to the power supply management unit 100. When the port 200 is coupled to the external auxiliary power supply 20, the switching apparatus 420 is closed, so that external electric energy is transmitted to the power supply management unit 100.

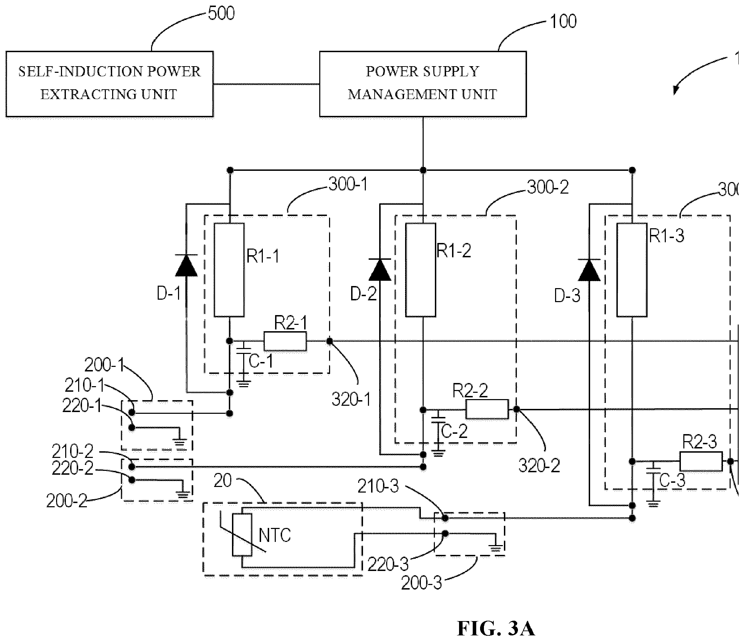

Fig. 3A shows a diagram of a sensor device 10 when coupled to a sensing apparatus 20 according to some embodiments of the present disclosure. As shown in Fig. 3A, the sensor device 10 includes the power supply management unit 100, a three-way port multiplexing circuit, a self-induction power extracting circuit 500 and a control unit 600. The first port multiplexing circuit includes the port 200-1, a signal detection unit 300-1 and a diode D-1 as an external auxiliary power supply switching-on unit 400-1. Correspondingly, the second port multiplexing circuit includes the port 200-2, the signal detection unit 300-2 and the diode D-2 as external auxiliary power supply switching-on unit 400-2. The third port multiplexing circuit includes the port 200-3, signal detection unit 300-3 and diode D-3 as external auxiliary power supply switching-on unit 400-3. The port 200-1 includes a first terminal 210-1 and a second terminal 220-1; the port 200-2 includes a first terminal 210-2 and a second terminal 220-2; the port 200-3 includes a first terminal 210-3 and a second terminal 220-3.

Specifically, the signal detection unit 300-1 includes a resistor R1-1, a capacitor C-1, a resistor R2-1 and an output end 320-1. The first end of the resistor R1-1 is coupled to the power supply management unit 100 and the first end of the diode D-1. The second end of the resistor R1-1 is coupled to the first end of the resistor R2-1, the first end of the capacitor C-1, the second end of the diode D-1 and the first terminal 210-1 of the port 200-1. The second end of the first end of the resistor R2-1 is coupled to the output end 320-1 of the signal detection unit 300-1. Here, the resistor R1-1 is used as a voltage dividing apparatus. The capacitor C-1 and the resistor R2-1 together form an anti-aliasing filter. In addition, the resistor R2-1 also acts as a buffering apparatus alone.

Similarly, the signal detection unit 300-2 includes a resistor R1-2, a capacitor C-2, a resistor R2-2 and an output end 320-2 with the same connection mode and function as the corresponding devices in the signal detection unit 300-1. The signal detection unit 300-3 also includes a resistor R1-3, a capacitor C-3, a resistor R2-3 and an output end 320-3 with the same connection mode and function as the corresponding devices in the signal detection unit 300-1.

In the embodiment shown in Fig. 3A, the port 200-3 is coupled to the sensing apparatus 20. The sensing apparatus 20 is, for example, a temperature sensor and includes a negative temperature coefficient (NTC) thermistor. At this time, the first end of NTC thermistor is coupled to the first terminal 210-3 of the port 200-3 and further coupled to the second end of resistor R1-3. Meanwhile, the second end of the NTC thermistor is coupled to the second terminal 220-3 of the port 200-3, and further grounded. In this embodiment, the power supply management unit 100 obtains electric energy from the self-induction power extracting unit 500. The voltage at the cathode of diode D-3 is higher than the voltage at the anode of diode D-3, so diode D-3 is turned off. Thus, the resistor R1-3 and the NTC thermistor are connected in series between the power supply management unit 100 and the ground, and divide the electric energy loaded at the first end of the resistor R1-3 from the power supply management unit 100, thereby forming a sensing signal with a corresponding voltage at the second end of the resistor R1-3. The sensing signal reaches the output end 320-3 of the signal detection unit 300-3 through filtering and buffering to be further transmitted to the control unit 600 for processing.

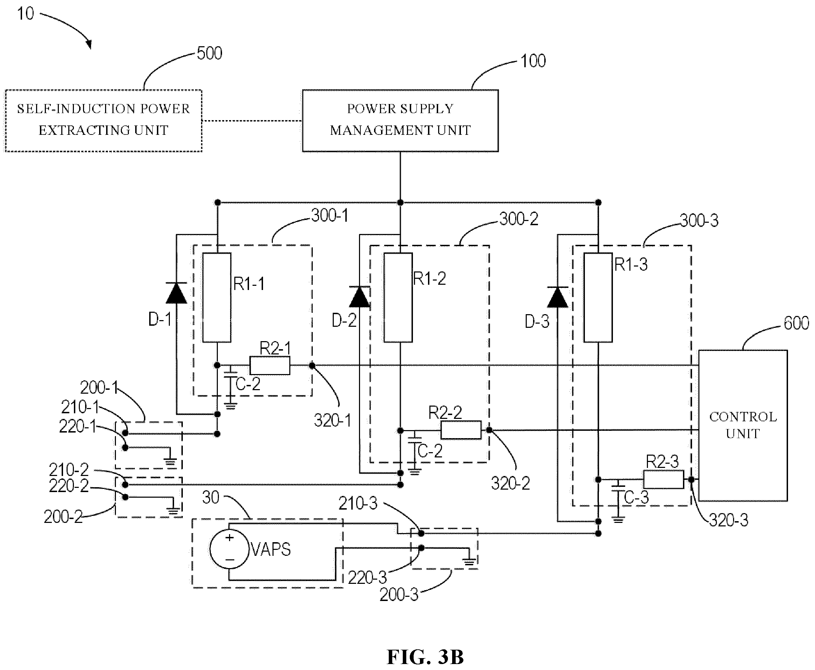

Fig. 3B shows a diagram of the sensor device 10 when coupled to an external auxiliary power supply 30 according to some embodiments of the present disclosure. In the embodiment shown in Fig. 3B, the structure of the sensor device 10 is the same as that of the sensor device 10 in Fig. 3A, and the structure will not be described for the sake of brevity. As shown in Fig. 3B, the port 200-3 is coupled to the external auxiliary power supply 30. The external auxiliary power supply 30 includes, for example, a variable voltage power supply (VAPS). At this time, the anode of the external auxiliary power supply 30 is coupled to the first terminal 210-3 of the port 200-3 and further coupled to the second terminal of the resistor R1-3. Meanwhile, the cathode of the external auxiliary power supply 30 is coupled to the second terminal 220-3 of the port 200-3, and further grounded. In this embodiment, the power supply management unit 100 does not obtain power from the self-induction power extracting unit 500 and therefore does not supply power to the signal detection unit 300-3. At this time, the voltage at the anode of diode D-3 is higher than the voltage at the cathode of diode D-3, so diode D-3 is turned on. Thus, the electric energy from the external auxiliary power supply 30 is directly transmitted to the power supply management unit 100 from the port 200-3, and then power is supplied from the power supply management unit 100 to other interiors.

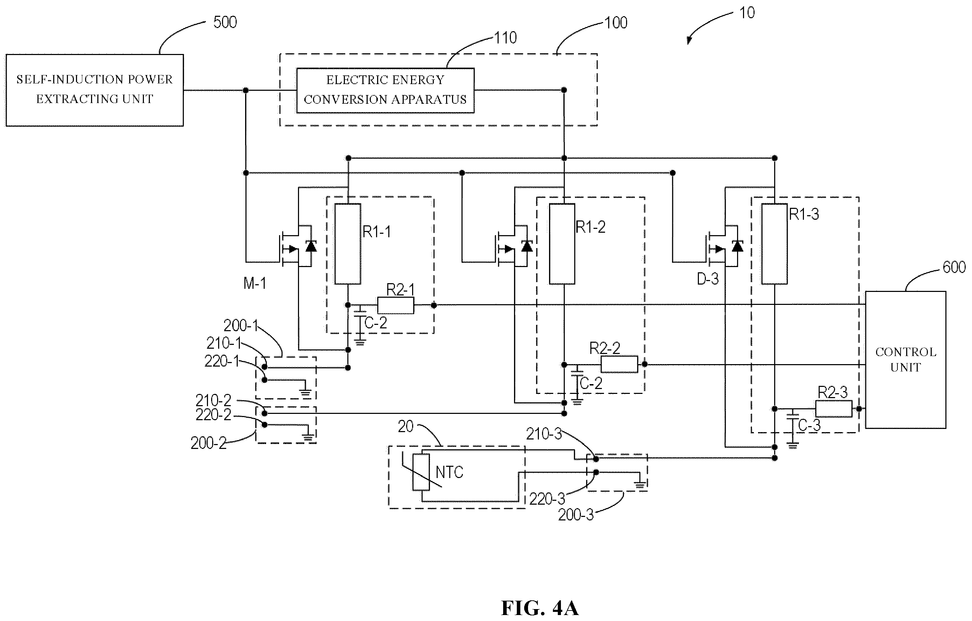

Fig. 4A shows a diagram of a sensor device 10 when coupled to a sensing apparatus 20 according to other embodiments of the present disclosure. In the embodiment shown in Fig. 4A, the power supply management unit 100, the port 200, the signal detection unit 300, the self-induction power extracting unit 500 and the control unit of the sensor device 10 are the same as those of the sensor device 10 in Fig. 3A, and the structures are not described for the sake of brevity. Different from that shown in Fig. 3A, the external auxiliary power supply switching-on unit 400 of each port multiplexing circuit includes P-channel MOSFETs M-1, M-2 and M-3 (collectively referred to as P-channel MOSFET M). As shown in Fig. 4A, the gate of the P-channel MOSFET M is coupled to the output end of the self-induction power extracting unit 500, and the drain thereof is coupled to the first terminal 210 of the port 200, and the source thereof is coupled to the power supply management unit.

In this embodiment, the power from the self-induction power extracting unit 500 is transmitted to the power supply management unit 100 and also to the gate of the P-channel MOSFET M. At this time, the gate receives a control signal at the high electrical level and turns off the drain and source of the P-channel MOSFET M. Thus, the resistor R1-3 and the NTC thermistor are connected in series between the power supply management unit 100 and the ground, and divide the electric energy loaded at the first end of the resistor R1-3 from the power supply management unit 100, thereby forming a sensing signal with a corresponding voltage at the second end of the resistor R1-3. The sensing signal reaches the output end 320-3 of the signal detection unit 300-3 through filtering and buffering to be further transmitted to the control unit 600 for processing.

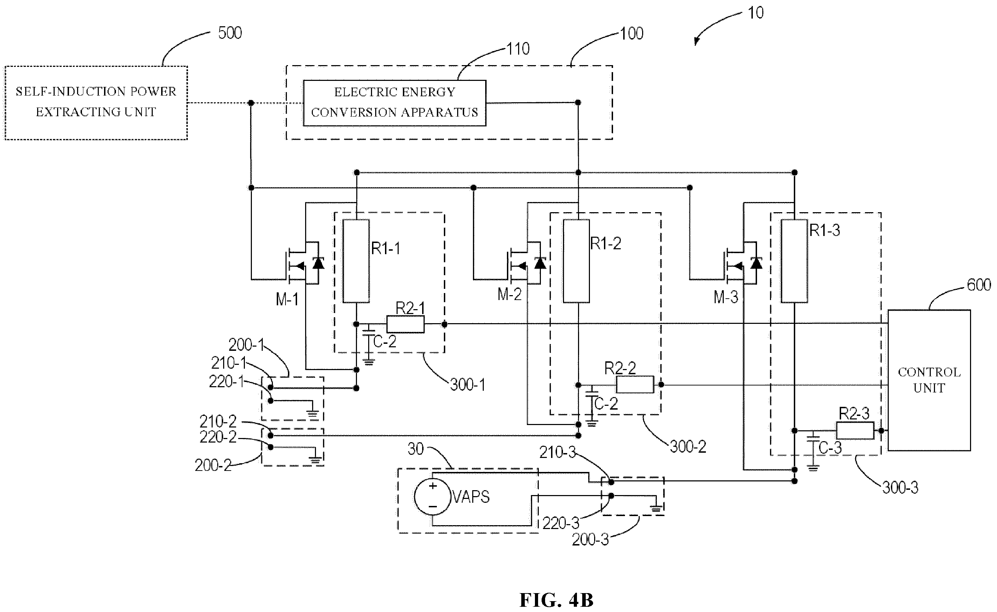

Fig. 4B shows a diagram of the sensor device 10 when coupled to the external auxiliary power supply 30 according to other embodiments of the present disclosure. In the embodiment shown in Fig. 4B, the structure of the sensor device 10 is the same as that of the sensor device 10 in Fig. 4A, and the structure will not be described for the sake of brevity. As shown in Fig. 4B, the port 200-3 is coupled to the external auxiliary power supply 30. At this time, the anode of the external auxiliary power supply 30 is coupled to the first terminal 210-3 of the port 200-3 and further coupled to the second terminal of the resistor R1-3. Meanwhile, the cathode of the external auxiliary power supply 30 is coupled to the second terminal 220-3 of the port 200-3, and further grounded. In this embodiment, the power supply management unit 100 does not obtain power from the self-induction power extracting unit 500 and therefore does not supply power to the signal detection unit 300-3. Meanwhile, the gate of P-channel MOSFET M-3 is at the low electrical level, which makes P-channel MOSFET M-3 conductive. Thus, the electric energy from the external auxiliary power supply 30 is directly transmitted to the power supply management unit 100 from the port 200-3, and then power is supplied from the power supply management unit 100 to other interiors.

It should be understood that the sensing apparatus 20 for detecting temperature is only exemplary, and the sensor device 10 may also be coupled to a passive sensing apparatus for measuring other physical quantities, and has a signal detection unit corresponding to the passive sensing apparatus. In some embodiments, a sensor device may be coupled to a voltage sensing apparatus and/or a current sensing apparatus, for example, to detect a voltage or a current in an electrical device.

In some embodiments, the gate of the P-channel MOSFET M may also be coupled to and receive control signals from the control unit 600. The control unit 600 can detect the port voltage at the port 200 and send a control signal at the low electrical level to the gate when it is determined that the port voltage is higher than a predetermined threshold, and send a control signal at the high electrical level to the gate when it is determined that the port voltage is lower than a predetermined threshold.

Without prejudice to the basic principles, the details and embodiments may vary, even significantly, with respect to what has been described by way of example only, without departing from the scope of protection. The various embodiments described above can be combined to provide further embodiments. These and other changes to the embodiments can be made in light of the above detailed description. Generally, in the following claims, the terms used should not be interpreted as limiting the claims to the specific embodiments disclosed in the specification and claims, but should be interpreted as including all possible embodiments and the full scope of equivalents to which such claims are entitled. Therefore, the claims are not limited by the disclosure.

## Claims

1. A sensor device (10) for use in a group of electrical devices, the group comprising: circuit breaker, switch cabinet, copper bar connection points, cable connection points, copperbar, cable joint;
the sensor device (10) comprising:
a power supply management unit (100) configured to selectively receive internal electric energy or external electric energy and supply power to an internal circuit;
a port (200) adapted to be coupled to a sensing apparatus (20) or an external auxiliary power supply (30) for providing the external electric energy;
a signal detection unit (300) having a first end coupled to the power supply management unit (100) and a second end coupled to the port (200), the signal detection unit (300) being configured to generate a sensing signal when the port (200) is coupled to the sensing apparatus; and
an external auxiliary power supply switching-on unit (400) having a first end coupled to the power supply management unit (100) and a second end coupled to the port (200), the external auxiliary power supply switching-on unit (400) being configured to transmit the electric energy to the power supply management unit (100) in response to receiving electric energy from the port (200) when the port (200) is coupled to the external auxiliary power supply.

2. The sensor device (1) according to claim 1, wherein the external auxiliary power supply switching-on unit (400) comprises a unidirectional conduction apparatus (410) having an input end coupled to the port (200) and an output end coupled to the power supply management unit (100), and the unidirectional conduction apparatus (410) is configured to conduct electricity in response to receiving electric energy from the port (200), so that the external electric energy is transmitted to the power supply management unit (100).

3. The sensor device (1) according to claim 2, wherein the unidirectional conduction apparatus (410) comprises a diode (D), particularly
wherein the diode (D) is configured to clip the sensing signal when the port (200) is coupled to the sensing apparatus (20).

4. The sensor device (1) according to any of the preceding claims, wherein the external auxiliary power supply switching-on unit (400) comprises a switching apparatus (420) having a first end coupled to the port (200) and a second end coupled to the power supply management unit (100), and the switching apparatus (420) is configured to conduct electricity in response to the port (200) being coupled to the external auxiliary power supply (20), so that the external electric energy is transmitted to the power supply management unit (100).

5. The sensor device (1) according to claim 4, wherein the switching apparatus (420) comprises:
a P-channel MOSFET(M) having a gate configured to receive a control signal, a drain coupled to the port (200) and a source coupled to the power supply management unit (100), wherein the P-channel MOSFET(M) is configured to turn off in response to the control signal being at the high electrical level and turn on in response to the control signal being at the low electrical level.

6. The sensor device (1) according to claim 5, wherein the gate is coupled to a self-induction power extracting unit (500) and is configured to receive the control signal from the self-induction power extracting unit (500), wherein the control signal is at the high electrical level when the self-induction power extracting unit (500) is in operation and at the low electrical level when the self-induction power extracting unit (500) is not in operation.

7. The sensor device (1) according to claim 5, wherein the gate is coupled to a control unit (600) and configured to receive the control signal from the control unit (600), wherein the control unit (600) is configured to detect port voltage at the port (200) and send the control signal at the low electrical level to the gate in response to determining that the port voltage is higher than a predetermined threshold, and send the control signal at the high electrical level to the gate in response to determining that the port voltage is lower than a predetermined threshold.

8. The sensor device (1) according to claim 6, wherein the self-induction power extracting unit (500) is further coupled to the power supply management unit (100) and configured to generate the internal electric energy for transmission to the power supply management unit (100).

9. The sensor device (1) according to claim 8, wherein the power supply management unit (100) comprises:
an electric energy conversion apparatus (110) coupled to the self-induction power extracting unit (500) and configured to convert electric energy generated by the self-induction power extracting unit (500) into power supply electric energy of the sensor device (1) after rectification and voltage regulation.

10. The sensor device (1) according to claim 8, wherein the electric energy conversion apparatus (110) comprises a reverse protection apparatus.

11. The sensor device (1) according to any of the preceding claims, wherein the signal detection unit (300) comprises:
a filtering apparatus (330) configured to filter a sensing signal, and/or
a buffering apparatus (340) configured to suppress a sensing signal below a predetermined voltage threshold or a predetermined current threshold.

12. The sensor device (1) according to any of the preceding claims, wherein the signal detection unit (300) comprises a voltage dividing apparatus (310) and an output end (320), and the port (200) comprises a first terminal (210) and a second terminal (220),
wherein a first end of the voltage dividing apparatus (310) is coupled to the power supply management unit (100) and a second end is coupled to the first terminal (210) and the output end (320), and the second terminal (220) is grounded.

13. The sensor device (1) according to claim 12, wherein the sensing apparatus (20) comprises a thermistor, and wherein, when the port (200) is coupled to the sensing apparatus (20), a second end of the voltage dividing apparatus (310) is coupled to the thermistor such that a voltage sensing signal indicating a temperature sensed by the sensing apparatus (20) is formed at a second end of the voltage dividing apparatus (310).

14. The sensor device (1) according to any of the preceding claims, comprising a set of signal detection units (300), a set of external auxiliary power supply switching-on units (400) and a set of ports (200),
wherein a first port (200) in the set of ports (200) is coupled to the sensing apparatus (20) and a second port (200) in the set of ports (200) is coupled to the external auxiliary power supply (30).

15. An electrical device comprising the sensor device according to any one of claims 1-14.

## Patentansprüche

1. Sensorvorrichtung (10) zur Verwendung in einer Gruppe von elektrischen Vorrichtungen, wobei die Gruppe Folgendes umfasst: Leistungsschalter, Schaltschrank, Kupferschienenanschlusspunkte, Kabelanschlusspunkte, Kupferschiene, Kabelverbindung;
wobei die Sensorvorrichtung (10) Folgendes umfasst:
eine Stromversorgungs-Verwaltungseinheit (100), die dazu ausgelegt ist, selektiv interne elektrische Energie oder externe elektrische Energie zu empfangen und Leistung an einen internen Schaltkreis zu liefern;
einen Anschluss (200), der dazu ausgelegt ist, mit einer Erfassungsvorrichtung (20) oder einer externen Hilfsstromversorgung (30) zum Bereitstellen der externen elektrischen Energie gekoppelt zu werden;
eine Signaldetektionseinheit (300) mit einem ersten Ende, das mit der Stromversorgungs-Verwaltungseinheit (100) gekoppelt ist, und einem zweiten Ende, das mit dem Anschluss (200) gekoppelt ist, wobei die Signaldetektionseinheit (300) dazu ausgelegt ist, ein Erfassungssignal zu erzeugen, wenn der Anschluss (200) mit der Erfassungsvorrichtung gekoppelt ist; und
eine externe Hilfsstromversorgungs-Einschalteinheit (400) mit einem ersten Ende, das mit der Stromversorgungs-Verwaltungseinheit (100) gekoppelt ist, und einem zweiten Ende, das mit dem Anschluss (200) gekoppelt ist, wobei die externe Hilfsstromversorgungs-Einschalteinheit (400) ausgelegt ist, um die elektrische Leistung an die Stromversorgungs-Verwaltungseinheit (100) in Reaktion auf das Empfangen von elektrischer Leistung von dem Anschluss (200) zu übertragen, wenn der Anschluss (200) mit der externen Hilfsstromversorgung gekoppelt ist.

2. Sensorvorrichtung (1) nach Anspruch 1, wobei die externe Hilfsstromversorgungs-Einschalteinheit (400) eine unidirektionale Leitungsvorrichtung (410) mit einem Eingangsende, das mit dem Anschluss (200) gekoppelt ist, und einem Ausgangsende, das mit der Stromversorgungs-Verwaltungseinheit (100) gekoppelt ist, umfasst und die unidirektionale Leitungsvorrichtung (410) dazu ausgelegt ist, Elektrizität als Reaktion auf das Empfangen elektrischer Energie von dem Anschluss (200) zu leiten, so dass die externe elektrische Energie an die Stromversorgungs-Verwaltungseinheit (100) übertragen wird.

3. Sensorvorrichtung (1) nach Anspruch 2, wobei die unidirektionale Leitungsvorrichtung (410) insbesondere eine Diode (D) umfasst,
wobei die Diode (D) dazu ausgelegt ist, das Erfassungssignal zu klemmen, wenn der Anschluss (200) mit der Erfassungsvorrichtung (20) gekoppelt ist.

4. Sensorvorrichtung (1) nach einem der vorhergehenden Ansprüche, wobei die externe Hilfsstromversorgungs-Einschalteinheit (400) eine Schaltvorrichtung (420) mit einem ersten Ende, das mit dem Anschluss (200) gekoppelt ist, und einem zweiten Ende, das mit der Stromversorgungs-Verwaltungseinheit (100) gekoppelt ist, umfasst, und die Schaltvorrichtung (420) dazu ausgelegt ist, Elektrizität als Reaktion darauf zu leiten, dass der Anschluss (200) mit der externen Hilfsstromversorgung (20) gekoppelt ist, so dass die externe elektrische Energie an die Stromversorgungs-Verwaltungseinheit (100) übertragen wird.

5. Sensorvorrichtung (1) nach Anspruch 4, wobei die Schaltvorrichtung (420) Folgendes umfasst:
einen P-Kanal-MOSFET (M) mit einem Gate, das zum Empfangen eines Steuersignals konfiguriert ist, einem Drain, der mit dem Anschluss (200) gekoppelt ist, und einer Source, die mit der Stromversorgungs-Verwaltungseinheit (100) gekoppelt ist, wobei der P-Kanal-MOSFET (M) dazu ausgelegt ist, als Reaktion darauf, dass das Steuersignal auf dem hohen elektrischen Pegel ist, auszuschalten und als Reaktion darauf, dass das Steuersignal auf dem niedrigen elektrischen Pegel ist, einzuschalten.

6. Sensorvorrichtung (1) nach Anspruch 5, wobei das Gate mit einer Selbstinduktions-Leistungsextraktionseinheit (500) gekoppelt ist und dazu ausgelegt ist, das Steuersignal von der Selbstinduktions-Leistungsextraktionseinheit (500) zu empfangen, wobei sich das Steuersignal auf dem hohen elektrischen Pegel befindet, wenn die Selbstinduktions-Leistungsextraktionseinheit (500) in Betrieb ist, und auf dem niedrigen elektrischen Pegel, wenn die Selbstinduktions-Leistungsextraktionseinheit (500) nicht in Betrieb ist.

7. Sensorvorrichtung (1) nach Anspruch 5, wobei das Gate mit einer Steuereinheit (600) gekoppelt ist und dazu ausgelegt ist, das Steuersignal von der Steuereinheit (600) zu empfangen, wobei die Steuereinheit (600) dazu ausgelegt ist, Anschlussspannung an dem Anschluss (200) zu detektieren und das Steuersignal mit dem niedrigen elektrischen Pegel an das Gate als Reaktion auf das Bestimmen, dass die Anschlussspannung höher als eine vorbestimmte Schwelle ist, zu senden, und Senden des Steuersignals mit dem hohen elektrischen Pegel an das Gate als Reaktion auf das Bestimmen, dass die Anschlussspannung niedriger als eine vorbestimmte Schwelle ist.

8. Sensorvorrichtung (1) nach Anspruch 6, wobei die Selbstinduktions-Leistungsextraktionseinheit (500) ferner mit der Stromversorgungs-Verwaltungseinheit (100) gekoppelt ist und dazu ausgelegt ist, die interne elektrische Energie zur Übertragung an die Stromversorgungs-Verwaltungseinheit (100) zu erzeugen.

9. Sensorvorrichtung (1) nach Anspruch 8, wobei die Stromversorgungs-Verwaltungseinheit (100) Folgendes umfasst:
eine elektrische Energieumwandlungsvorrichtung (110), die mit der Selbstinduktions-Leistungsextraktionseinheit (500) gekoppelt ist und dazu ausgelegt ist, elektrische Energie, die durch die Selbstinduktions-Leistungsextraktionseinheit (500) erzeugt wird, nach Gleichrichtung und Spannungsregelung in elektrische Stromversorgungsenergie der Sensorvorrichtung (1) umzuwandeln.

10. Sensorvorrichtung (1) nach Anspruch 8, wobei die elektrische Energieumwandlungsvorrichtung (110) eine Umkehrschutzvorrichtung umfasst.

11. Sensorvorrichtung (1) nach einem der vorhergehenden Ansprüche, wobei die Signaldetektionseinheit (300) Folgendes umfasst:
eine Filtervorrichtung (330), die dazu ausgelegt ist, ein Erfassungssignal zu filtern, und/oder
eine Puffervorrichtung (340), die dazu ausgelegt ist, ein Erfassungssignal unterhalb einer vorbestimmten Spannungsschwelle oder einer vorbestimmten Stromschwelle zu unterdrücken.

12. Sensorvorrichtung (1) nach einem der vorhergehenden Ansprüche, wobei die Signaldetektionseinheit (300) eine Spannungsteilungsvorrichtung (310) und ein Ausgangsende (320) umfasst und der Anschluss (200) einen ersten Anschluss (210) und einen zweiten Anschluss (220) umfasst,
wobei ein erstes Ende der Spannungsteilungsvorrichtung (310) mit der Stromversorgungs-Verwaltungseinheit (100) gekoppelt ist und ein zweites Ende mit dem ersten Anschluss (210) und dem Ausgangsende (320) gekoppelt ist und der zweite Anschluss (220) geerdet ist.

13. Sensorvorrichtung (1) nach Anspruch 12, wobei die Erfassungsvorrichtung (20) einen Thermistor umfasst und wobei, wenn der Anschluss (200) mit der Erfassungsvorrichtung (20) gekoppelt ist, ein zweites Ende der Spannungsteilungsvorrichtung (310) mit dem Thermistor gekoppelt ist, so dass ein Spannungserfassungssignal, das eine durch die Erfassungsvorrichtung (20) erfasste Temperatur angibt, an einem zweiten Ende der Spannungsteilungsvorrichtung (310) gebildet wird.

14. Sensorvorrichtung (1) nach einem der vorhergehenden Ansprüche, umfassend einen Satz von Signaldetektionseinheiten (300), einen Satz von externen Hilfsstromversorgungs-Einschalteinheiten (400) und einen Satz von Anschlüssen (200),
wobei ein erster Anschluss (200) in dem Satz von Anschlüssen (200) mit der Erfassungsvorrichtung (20) gekoppelt ist und ein zweiter Anschluss (200) in dem Satz von Anschlüssen (200) mit der externen Hilfsstromversorgung (30) gekoppelt ist.

15. Elektrische Vorrichtung, die die Sensorvorrichtung nach einem der Ansprüche 1-14 umfasst.

## Revendications

1. Dispositif capteur (10) destiné à être utilisé dans un groupe de dispositifs électriques, le groupe comprenant les éléments suivants : disjoncteur, armoire de commande, points de connexion de barre de cuivre, points de connexion de câbles, barre de cuivre, joint de câbles ;
le dispositif capteur (10) comprenant :
une unité de gestion d'alimentation (100) configurée pour recevoir sélectivement de l'énergie électrique interne ou de l'énergie électrique externe et alimenter un circuit interne ;
un port (200) adapté pour être couplé à un appareil de détection (20) ou à une alimentation auxiliaire externe (30) pour fournir l'énergie électrique externe ;
une unité de détection de signal (300) ayant une première extrémité couplée à l'unité de gestion d'alimentation (100) et une deuxième extrémité couplée au port (200), l'unité de détection de signal (300) étant configurée pour générer un signal de détection lorsque le port (200) est couplé à l'appareil de détection ; et
une unité de commutation d'alimentation auxiliaire externe (400) ayant une première extrémité couplée à l'unité de gestion d'alimentation (100) et une deuxième extrémité couplée au port (200), l'unité de commutation d'alimentation auxiliaire externe (400) étant configurée pour transmettre l'énergie électrique à l'unité de gestion d'alimentation (100) en réponse à la réception d'énergie électrique en provenance du port (200) lorsque le port (200) est couplé à l'alimentation auxiliaire externe.

2. Dispositif capteur (1) selon la revendication 1, dans lequel l'unité de commutation d'alimentation auxiliaire externe (400) comprend un appareil de conduction unidirectionnelle (410) ayant une extrémité d'entrée couplée au port (200) et une extrémité de sortie couplée à l'unité de gestion d'alimentation électrique (100), et l'appareil de conduction unidirectionnelle (410) est configuré pour conduire l'électricité en réponse à la réception d'énergie électrique en provenance du port (200), de telle sorte que l'énergie électrique externe soit transmise à l'unité de gestion d'alimentation électrique (100).

3. Dispositif capteur (1) selon la revendication 2, dans lequel le dispositif de conduction unidirectionnelle (410) comprend une diode (D), en particulier
dans lequel la diode (D) est configurée pour écrêter le signal de détection lorsque le port (200) est couplé à l'appareil de détection (20).

4. Dispositif capteur (1) selon l'une quelconque des revendications précédentes, dans lequel l'unité de commutation d'alimentation auxiliaire externe (400) comprend un appareil de commutation (420) ayant une première extrémité couplée au port (200) et une deuxième extrémité couplée à l'unité de gestion d'alimentation (100), et l'appareil de commutation (420) est configuré pour conduire l'électricité en réponse au couplage du port (200) à l'alimentation auxiliaire externe (20), de telle sorte que l'énergie électrique externe soit transmise à l'unité de gestion d'alimentation (100).

5. Dispositif capteur (1) selon la revendication 4, dans lequel l'appareil de commutation (420) comprend :
un MOSFET(M) à canal P ayant une grille configurée pour recevoir un signal de commande, un drain couplé au port (200) et une source couplée à l'unité de gestion d'alimentation (100), le MOSFET(M) à canal P étant configuré pour se bloquer en réponse au fait que le signal de commande soit au niveau électrique haut et devenir passant en réponse au fait que le signal de commande soit au niveau électrique bas.

6. Dispositif capteur (1) selon la revendication 5, dans lequel la grille est couplée à une unité d'extraction de puissance auto-inductive (500) et est configurée pour recevoir le signal de commande issu de l'unité d'extraction de puissance auto-inductive (500), dans lequel le signal de commande est au niveau électrique haut lorsque l'unité d'extraction de puissance auto-inductive (500) est en fonctionnement et au niveau électrique bas lorsque l'unité d'extraction de puissance auto-inductive (500) n'est pas en fonctionnement.

7. Dispositif capteur (1) selon la revendication 5, dans lequel la grille est couplée à une unité de commande (600) et configurée pour recevoir le signal de commande provenant de l'unité de commande (600), l'unité de commande (600) étant configurée pour détecter une tension de port au niveau du port (200) et envoyer le signal de commande au niveau électrique bas à la grille lorsqu'il est déterminé que la tension de port est supérieure à un seuil prédéterminé, et envoyer le signal de commande au niveau électrique haut à la grille lorsqu'il est déterminé que la tension de port est inférieure à un seuil prédéterminé.

8. Dispositif capteur (1) selon la revendication 6, dans lequel l'unité d'extraction de puissance auto-inductive (500) est en outre couplée à l'unité de gestion d'alimentation (100) et configurée pour générer l'énergie électrique interne pour la transmettre à l'unité de gestion d'alimentation (100).

9. Dispositif capteur (1) selon la revendication 8, dans lequel l'unité de gestion d'alimentation (100) comprend :
un appareil de conversion d'énergie électrique (110) couplé à l'unité d'extraction de puissance auto-inductive (500) et configuré pour convertir l'énergie électrique générée par l'unité d'extraction de puissance auto-inductive (500) en énergie électrique d'alimentation du dispositif capteur (1) après redressement et régulation de tension.

10. Dispositif capteur (1) selon la revendication 8, dans lequel l'appareil de conversion d'énergie électrique (110) comprend un appareil de protection inverse.

11. Dispositif capteur (1) selon l'une quelconque des revendications précédentes, dans lequel l'unité de détection de signal (300) comprend :
un appareil de filtrage (330) configuré pour filtrer un signal de détection, et/ou
un appareil de mise en tampon (340) configuré pour éliminer un signal de détection situé en dessous d'un seuil de tension prédéterminé ou d'un seuil de courant prédéterminé.

12. Dispositif capteur (1) selon l'une quelconque des revendications précédentes, dans lequel l'unité de détection de signal (300) comprend un appareil de division de tension (310) et une extrémité de sortie (320), et le port (200) comprend une première borne (210) et une deuxième borne (220),
dans lequel une première extrémité de l'appareil de division de tension (310) est couplée à l'unité de gestion d'alimentation (100) et une deuxième extrémité est couplée à la première borne (210) et à l'extrémité de sortie (320), et la deuxième borne (220) est reliée à la masse.

13. Dispositif capteur (1) selon la revendication 12, dans lequel l'appareil de détection (20) comprend une thermistance, et dans lequel, lorsque le port (200) est couplé à l'appareil de détection (20), une deuxième extrémité de l'appareil de division de tension (310) est couplée à la thermistance, de telle sorte qu'un signal de détection de tension indiquant une température détectée par l'appareil de détection (20) soit formé au niveau d'une deuxième extrémité de l'appareil de division de tension (310).

14. Dispositif capteur (1) selon l'une quelconque des revendications précédentes, comprenant un ensemble d'unités de détection de signal (300), un ensemble d'unités de commutation d'alimentation auxiliaire externe (400) et un ensemble de ports (200),
dans lequel un premier port (200) de l'ensemble de ports (200) est couplé à l'appareil de détection (20) et un deuxième port (200) de l'ensemble de ports (200) est couplé à l'alimentation auxiliaire externe (30).

15. Dispositif électrique comprenant le dispositif capteur selon l'une quelconque des revendications 1 à 14.
